# EUROPÄISCHE PATENTANMELDUNG

(11) **EP 1 103 793 A1**
(43) Veröffentlichungstag der Anmeldung: **30.05.2001**
(21) Anmeldenummer: 99811080.3
(22) Anmeldetag: 23.11.1999
(51) Int. Cl.: G01F 11/00

(54) **Dosiereinrichtung**

(71) Anmelder: METROHM AG, 9100 Herisau (CH)
(72) Erfinder: Kaempf, Karl, 8253 Diessenhofen (CH); Kirschenbühler, Peter, 9100 Herisau (CH)
(74) Vertreter: Hepp, Dieter

(57) **Zusammenfassung**

Die Dosiereinrichtung enthält eine Dosiereinheit (24, 25) mit einem Vorratsgefäss (24) für eine zu dosierende Flüssigkeit und einer Mess- und Fördervorrichtung (25). Die Mess- und Fördervorrichtung (25) wird von einem Steuergerät (21) gesteuert. Die Dosiereinheit (24, 25) besitzt eine mit dem Vorratsgefäss mechanisch verbundene Speichervorrichtung (27) für Daten, welche wenigstens die Art der Flüssigkeit in dem Vorratsgefäss (24) charakterisieren. Diese Daten werden vor dem Beginn eines Dosiervorgangs in das Steuergerät (21) gelesen. Damit kann die manuelle Eingabe der Daten nach einem Wechsel der Dosiereinheit (24, 25) und des Vorratsgefässes (24) entfallen.

## Beschreibung

Dosiereinrichtungen mit einem Steuergerät und mit wenigstens einer Dosiereinheit, die ein Vorratsgefäss für eine zu dosierende Flüssigkeit und eine durch das Steuergerät steuerbare Mess- und Fördervorrichtung enthält, sind bekannt. Sie können als Präzisionsdosierer verwendet werden, aber auch zum Pipettieren, Diluieren oder Dispensieren sowie für die Titration.

Ein Antriebsmittel der Mess- und Fördervorrichtung kann in der Dosiereinheit enthalten sein und von dem Steuergerät lediglich mit elektrischen Signalen gespeist werden; in diesem Fall können an das Steuergerät mehrere verschiedene Dosiereinheiten angeschlossen werden. Anderseits kann das Steuergerät ein Antriebsmittel für die Mess- und Fördervorrichtungen verschiedener, auswechselbarer Dosiereinheiten (Wechseleinheiten) enthalten. Wenn das Steuergerät für die Steuerung einer Dosiereinheit mit einem Vorratsgefäss eines bestimmten Inhalts eingerichtet wird oder zu Beginn eines Dosiervorgangs ein Vorratsgefäss ausgetauscht wird, müssen in das Steuergerät Daten eingegeben werden, die wenigstens die Art der Flüssigkeit in dem Vorratsgefäss (Substanzname, Konzentration, Titer, Verfalldatum usw.) und gegebenenfalls auch spezifische Merkmale der Mess- und Fördervorrichtung darstellen.

Die Aufgabe der Erfindung besteht darin, die Eingabe dieser Daten in das Steuergerät einer Dosiereinrichtung zu erleichtern und den Austausch von Vorratsgefässen und den Betrieb der Dosiereinrichtung einfacher, wirtschaftlicher und sicherer zu gestalten.

Die Aufgabe wird in erster Linie gemäss unabhängigen Patentansprüchen gelöst.

Mit der Erfindung können die erforderlichen Daten automatisch in das Steuergerät eingelesen werden. Dadurch wird die Bedienung vereinfacht und wird gleichzeitig die Gefahr von Eingabefehlern vermieden. Die in der Speichervorrichtung an der Dosiereinheit gespeicherten Daten charakterisieren u.a. die Dosierflüssigkeit im Vorratsgefäss. Zu Beginn eines Dosiervorgangs kann die Information aus der Speichervorrichtung abgerufen werden. Während der Abgabe von Flüssigkeit oder nach der Abgabe von Flüssigkeit aus dem Vorratsbehälter kann die Information in der Speichervorrichtung auf den neuen Stand gebracht werden, um dann z.B. nach Zwischenlagerung des Behälters beim neuerlichen Einsatz wieder an das Steuergerät abgegeben zu werden.

Ausführungsbeispiele der Erfindung werden nachstehend anhand der Zeichnung erläutert. In dieser zeigen:
Fig. 1 schematisch eine erste Ausführungsform einer Dosiereinrichtung und
Fig. 2 schematisch eine zweite Ausführungsform einer Dosiereinrichtung.

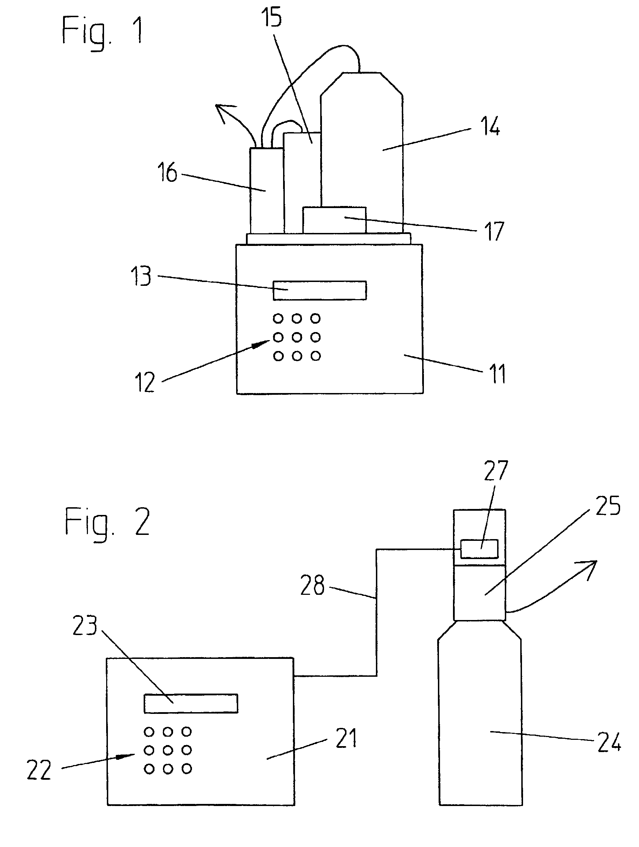

Die Fig. 1 zeigt ein Steuergerät 11 mit einer Tastatur 12 und einer Anzeige 13. Auf dem Steuergerät 11 ist eine Dosiereinheit angeordnet, die ein Vorratsgefäss 14 für eine zu dosierende Flüssigkeit und eine Mess- und Fördervorrichtung enthält. Im Ausführungsbeispiel enthält die Mess- und Fördervorrichtung einen Zylinder mit Kolben 15 und einen Zweiweghahn 16; stattdessen kann aber auch irgend eine andere geeignete Mess- und Fördervorrichtung verwendet werden.

Die Dosiereinheit 14, 15, 16 ist mit dem Steuergerät 11 lösbar und auswechselbar verbunden.

Die Dosiereinheit 14, 15, 16 enthält eine Speichervorrichtung 17, in welche Daten eingespeichert werden, die wenigstens die Art der Dosierflüssigkeit (Substanzname, Konzentration, Titer, Verfalldatum usw.) in dem Gefäss 14 darstellen, vorzugsweise auch spezifische Merkmale der Mess- und Fördervorrichtung 15, 16. Die Speichervorrichtung 17, z. B. ein Speicherchip, ist durch die Dosiereinheit mit dem Vorratsgefäss 14 mechanisch verbunden und bildet praktisch eine "elektronische Etikettierung" des Vorratsgefässes.

Vor dem Beginn eines Dosiervorgangs werden die in der Speichervorrichtung 17 gespeicherten Daten in das Steuergerät 11 eingelesen und wird an diesem mittels der Tastatur 12 ein gewünschtes Dosierprogramm eingegeben. Das Steuergerät 11 enthält ein Antriebsmittel mit z. B. einem Schrittmotor für die Mess- und Fördervorrichtung 15 und einen zweiten Motor für den Hahn 16. Die Antriebsmittel betätigen die Mess- und Fördervorrichtung 15 und den Hahn 16 zunächst zum Ansaugen von Flüssigkeit aus dem Vorratsgefäss 14. Dann stellt das Steuergerät 11 den Hahn 16 um und betätigt die Mess- und Fördervorrichtung 15 zum Ausstossen von Flüssigkeit zu einer Verbrauchsstelle. Die Menge der auszustossenden Flüssigkeit bzw. die zu bewirkende Bewegung der Mess-und Fördervorrichtung 15 berechnet das Steuergerät 11 anhand des eingegebenen Programms u.a. mit Hilfe der Daten, die aus der Speichervorrichtung 17 gelesen worden sind.

Nach der Beendigung des Dosiervorgangs kann das Steuergerät 11 gewünschtenfalls die in der Speichervorrichtung 17 gespeicherten Daten in Abhängigkeit von der im Dosiervorgang aus dem Vorratsgefäss 14 entnommenen Flüssigkeitsmenge oder von anderen GLP (Good laboratory practice) - relevanten Daten ändern, so dass die Daten auch die im Vorratsgefäss verbliebene Flüssigkeitsmenge darstellen.

Die Fig. 2 zeigt schematisch ein anderes Ausführungsbeispiel der Dosiereinrichtung. Diese enthält hier wieder ein Steuergerät 21 mit einer Tastatur 22 und einer Anzeige 23 sowie, getrennt vom Steuergerät, eine Dosiereinheit mit Antriebsmitteln. Die Dosiereinheit enthält ein Vorratsgefäss 24 für eine zu dosierende Flüssigkeit und eine Mess- und Fördervorrichtung 25 inkl. Hahn, die mit dem Steuergerät 21 über elektrische Leitungen 28 verbunden ist. Ueber weitere elektrische Leitungen (nicht dargestellt) können an das Steuergerät 21 weitere Dosiereinheiten (nicht dargestellt) angeschlossen sein.

Die Dosiereinheit 24, 25 enthält eine Speichervorrichtung 27, in welche Daten eingespeichert werden, die wenigstens die Art der Flüssigkeit (Substanzname, Konzentration, Titer, Verfalldatum usw.) in dem Gefäss 24 darstellen, vorzugsweise auch spezifische Merkmale der Mess- und Fördervorrichtung 25. Die Speichervorrichtung 27, z.B. ein Speicherchip, ist durch die Dosiereinheit mit dem Vorratsgefäss 24 mechanisch verbunden und bildet praktisch eine "elektronische Etikettierung" des Vorratsgefässes.

Vor dem Beginn eines Dosiervorgangs werden die in der Speichervorrichtung 27 gespeicherten Daten in das Steuergerät 21 eingelesen und wird an diesem mittels der Tastatur 22 ein gewünschtes Dosierprogramm eingegeben. Ein Antriebsmittel für die Mess- und Fördervorrichtung 25, z.B. ein Schrittmotor, ist in der Dosiereinheit 24, 25 enthalten und wird vom Steuergerät 21 mit elektrischen Signalen gespeist. Das Antriebsmittel betätigt die Mess- und Fördervorrichtung 25 beispielsweise wieder zunächst zum Ansaugen von Flüssigkeit aus dem Vorratsgefäss 24 und danach, nach Umstellung des Hahns, zum Ausstossen von Flüssigkeit zu einer Verbrauchsstelle. Die Menge der auszustossenden Flüssigkeit bzw. die zu bewirkende Bewegung der Mess- und Fördervorrichtung 25 berechnet das Steuergerät 21 anhand des eingegebenen Programms, u.a. mit Hilfe der Daten, die aus der Speichervorrichtung 27 gelesen worden sind.

Nach der Beendigung des Dosiervorgangs kann das Steuergerät 21 gewünschtenfalls die in der Speichervorrichtung 27 gespeicherten Daten in Abhängigkeit von der im Dosiervorgang aus dem Vorratsgefäss 24 entnommenen Flüssigkeitsmenge ändern, so dass die Daten auch die im Vorratsgefäss verbliebene Flüssigkeitsmenge darstellen. Der Speicher ist dabei z.B. als "Memory"-Baustein ausgebildet, der sowohl Lese- als auch Schreibzugriffe zulässt.

Die beschriebenen erfindungsgemässen Dosiereinrichtungen können je nach Arbeitsweise z. B. als Präzisionspumpen, zum Pipettieren, Dosieren, Diluieren, Dispensieren oder für die Titration verwendet werden.

## Patentansprüche

1. Dosiereinheit, mit einem Vorratsgefäss (14; 24) für eine zu dosierende Flüssigkeit und mit einer Mess- und Fördervorrichtung (15; 25), ausgebildet für die Steuerung durch ein Steuergerät (11; 21) in einer Dosiereinrichtung, gekennzeichnet durch eine über die Dosiereinheit mit dem Vorratsgefäss 14; 24) mechanisch verbundene Speichervorrichtung (17; 27) für Daten, welche wenigstens die Art der Flüssigkeit in dem Gefäss (14; 24) darstellen und welche in das Steuergerät (11; 21) einlesbar sind.

2. Dosiereinrichtung, mit einem Steuergerät (11; 21) und mit wenigstens einer Dosiereinheit (14, 15, 16; 24, 25), die ein Vorratsgefäss (14; 24) für eine zu dosierende Flüssigkeit und eine durch das Steuergerät (11; 21) steuerbare Mess- und Fördervorrichtung (15; 25) enthält, dadurch gekennzeichnet, dass die Dosiereinheit (14, 15, 16; 24, 25) eine mit dem Vorratsgefäss (14; 24) verbundene Speichervorrichtung (17; 27) für Daten enthält, welche wenigstens die Art der Flüssigkeit in dem Vorratsgefäss (14; 24) darstellen, und dass Mittel vorgesehen sind zum Einlesen der Daten in das Steuergerät (11; 21).

3. Dosiereinrichtung nach Anspruch 2, dadurch gekennzeichnet, dass das Steuergerät (11; 21) dazu eingerichtet ist, nach einem Dosiervorgang die in der Speichervorrichtung (17; 27) der Dosiereinheit gespeicherten Daten wenigstens in Abhängigkeit von der Menge der aus dem Vorratsgefäss (14; 24) entnommenen Flüssigkeit zu ändern.

4. Dosiereinrichtung nach Anspruch 2 oder 3, dadurch gekennzeichnet, dass die Dosiereinheit (14, 15, 16) mit dem Steuergerät (11) auswechselbar verbunden ist.

5. Vorratsgefäss zum lösbaren Verbinden mit einer Mess- und Fördervorrichtung (15; 25) gekennzeichnet durch eine mit dem Vorratsgefäss mechanisch verbundene vorgesehene elektronische Speichervorrichtung (17; 27), in welcher den Gefässinhalt charakterisierende Daten speicherbar bzw. aus welcher solche Daten abrufbar sind.

6. Verfahren zum Dosieren einer Flüssigkeit aus einem Vorratsgefäss (14; 24), das in einer Dosiereinheit (14, 15, 16; 24, 25) enthalten ist, welche auch eine durch ein Steuergerät (11; 21) steuerbare Mess- und Fördervorrichtung (15; 25) enthält, dadurch gekennzeichnet, dass vor dem Beginn eines Dosiervorgangs Daten aus einer in der Dosiereinheit (14, 15, 16; 24, 25) vorgesehenen Speichervorrichtung (17; 27) in das Steuergerät (11; 21) gelesen werden, welche Daten wenigstens die Art der Flüssigkeit in dem Vorratsgefäss darstellen, und dass dann die Dosierung u.a. mit Hilfe der eingelesenen Daten durchgeführt wird.

7. Verfahren nach Anspruch 6, dadurch gekennzeichnet, dass vor dem Beginn des Dosiervorgangs aus der Speichervorrichtung (17; 27) auch Daten in das Steuergerät (11; 21) gelesen werden, welche spezifische Merkmale der Mess- und Fördervorrichtung (15, 16; 25) der Dosiereinheit darstellen.

8. Verfahren nach Anspruch 6 oder 7, dadurch gekennzeichnet, dass nach der Beendigung des Dosiervorgangs die in der Speichervorrichtung (17; 27) der Dosiereinheit gespeicherten Daten durch das Steuergerät (11; 21) wenigstens in Abhängigkeit von der im Dosiervorgang aus dem Vorratsgefäss (14; 24) entnommenen Flüssigkeitsmenge geändert werden.

9. Verwendung von mit einem elektronischen Datenspeicher versehenen Dosiereinheiten als Wechseleinheiten in einer Dosiereinrichtung, wobei der Datenspeicher zur Aufnahme von Daten bestimmt ist, die in Relation zum Inhalt eines Vorratsgefässes der Dosiereinheit stehen, und wobei der Datenspeicher sowohl für Lese- als auch Schreib-Zugriffe ausgelegt ist.
